# EUROPEAN PATENT SPECIFICATION

(11) **EP 2 364 080 B1**
(45) Date of publication and mention of the grant of the patent: **27.03.2013**
(21) Application number: 09784683.6
(22) Date of filing: 10.07.2009
(51) Int. Cl.: A01K 27/00

(54) **RETRACTING DOG LEAD WITH MANUAL OVERRIDE**
EINZIEHBARE HUNDELEINE MIT MANUELLER ÜBERSTEUERUNG
LAISSE DE CHIEN RÉTRACTABLE AVEC SURPASSEMENT MANUEL

(30) Priority: 14.07.2008 GB 0812853
(43) Date of publication of application: 14.09.2011
(73) Proprietor: Lead Innovations, Wellingborough, Northants NN9 5EJ (GB)
(72) Inventor: REED, Michael, Wellingborough, Northants NN9 5EJ (GB)
(74) Representative: Hedges, Martin Nicholas
(86) International application number: PCT/GB2009/001724
(87) International publication number: WO 2010/007354

(56) References cited:
- US-A- 2 217 323
- US-A- 3 853 283
- US-A1- 2007 131 177

## Description

The present invention relates to automatically retracting dog leads and in particular to such dog leads which include a manual operation for retracting the lead.

Dog leads are known in the art in which the lead web or cord is wound onto a reel within a lead housing and, the reel being urged rotationally into a wound position by a spring or the like, the lead being extendable against the action of the biasing spring to extend the lead and thereby allow a dog attached thereto a wider range of movement whilst still being under the control of the human owner. As the dog moves away from the owner, move cord will be unwound from the reel against the action of the biasing spring, and as the animal moves back towards the owner, the spring automatically winds up the excess cord, thereby preventing the cord from resting on the ground where it might become tangled or cause an obstruction to the animal or the human owner. Such prior art leads typically also include a stop mechanism by means of which the human owner can prevent further unwinding of cord from the reel in the event that they wish to limit the range of movement of the animal away from them, for example in the circumstance where another dog might have appeared and the owner wishes to prevent their animal from reaching the other animal. Another system which is known on the prior art also includes an additional feature whereby, once the stop mechanism has been operated, the lead will still extend and retract up to the length at which the stop mechanism was imposed. This offers the advantage that, even when the range has been limited, the lead will still rewind and hence prevents extra lead cord from gathering on the ground where it might become tangled or the like as the animal moves back towards the owner.

However these prior art systems all suffer from the same draw back that, once the animal has extended the lead to a certain length, the owner must close the distance between the lead and the animal, either by pulling the animal back or by walking towards the animal, in order to reduce the lead and hence reduce the range of movement of the animal from the owner.

US-A-2217323, upon which the preamble of claim 1 is based, described a retracting animal lead comprising a housing having a handle portion and an internal chamber in which a spool is rotatably mounted, an extraction opening in the housing aligned with a winding cylinder of the spool, and rotational biasing means biasing the spool into a first rotational position, the spool being rotatable against the action of the biasing means so as, in use, to unwind from the spool a lead material wound thereon.

Other prior art systems are described in US 2007/131177 and US3853283.

According to the present invention there is provided a retracting animal lead as defined in claim 1.

A retractable lead in accordance with the invention has the advantage that the handle provides a system by means of which a user can "wind" their animal back in the circumstance where the user wishes to reduce the range of movement of the animal away himself without the user having to physically move towards the animal.

Preferably, the coupling means is operatively moveable between an engaged position in which it non-rotatably couples the winding handle to the spool and a disengaged position in which the winding handle to rotationally decoupled from the spool. In said disengaged position, the coupling means preferably non-rotatably couples the winding handle to the housing.

The housing preferably has an opening in one side thereof in which a winding disc is rotatably mounted so as to form on side of the internal aperture, the winding handle being eccentrically non-rotatable mounted on the outside of the winding disc. The coupling means is, then, advantageously eccentrically mounted on the inside of the winding disc and is radially slidably moveable between said engaged and disengaged positions. More particularly, the coupling means preferably has splines formed on inner and outer radial faces which compliments splines formed on the inner surface of the housing and splines associated with the spool, in a radially inner position of the coupling means the inner splines engaging the splines associated with the spool in order to effect a rotational drive coupling between the winding disc and the spool, and in a radially outer position, the outer splines engaging the splines of the inner surface of the housing in order to non-rotatably couple the winding handle to the housing.

The winding disc may be provided with a pair of circumferentially spaced apart mounting brackets extending at an eccentric position from its inner surface, the coupling means being mounted between said brackets so as to be constrained to rotate with the winding disc whilst being radially slidably moveable relative to the winding disc.

In a particularly preferred embodiment, the winding handle is pivotally attached to the winding disc for movement between an erect position in which it upstands from the disc and a folded position in which it extends diametrically across the winding disc. The winding handle may then be operatively connected to the coupling means so as automatically to move the coupling means radially from its disengaged position to its engaged position when the winding handle pivots from its folded to its erect position.

This arrangement has the advantage that the winding handle automatically disconnects from the spool when folded into its storage position and is instead rotationally locked to the housing. Accordingly, it will not move as the lead extends and retracts during the loading of the biasing spring during movement of the animal.

This may be achieved in a particularly preferred manner if an inner end of the winding handle operatively engages in an opening in the coupling means, the pivot point of the winding handle being located between the ends of the handle so that upon pivotal movement of the winding handle, said inner end moves radially relative to the winding disc, moving the coupling means between its engaged and disengaged positions.

The housing may be provided with a spool carrier rotatably mounted therein, the coupling means non-rotatably coupling the winding handle and the spool carrier, the spool carrier having an engagement surface on which the spool in concentrically mounted so as to non-rotatably connect the spool to the spool carrier.

The handle preferably includes locking means operable to engage the spool so as to prevent rotation thereof relative to the housing, thereby, in use, preventing the lead from unwinding from the spool. The locking means preferably includes a pin which engages between teeth formed on the spool, preventing the teeth from moving passed the pin and hence limiting the rotational movement of the spool.

In order that the invention may be well understood, there will now be described an embodiment thereof, given by way of example, reference being made to the accompanying drawings, in which:
Figure 1 is a prospective view of the right side of the housing with the handle part in a fold position,
Figure 2 is a prospective view of the left side of the housing with the handle in an extended position,
Figure 3 is a prospective view of the right side of the housing with the handle in an extended position,

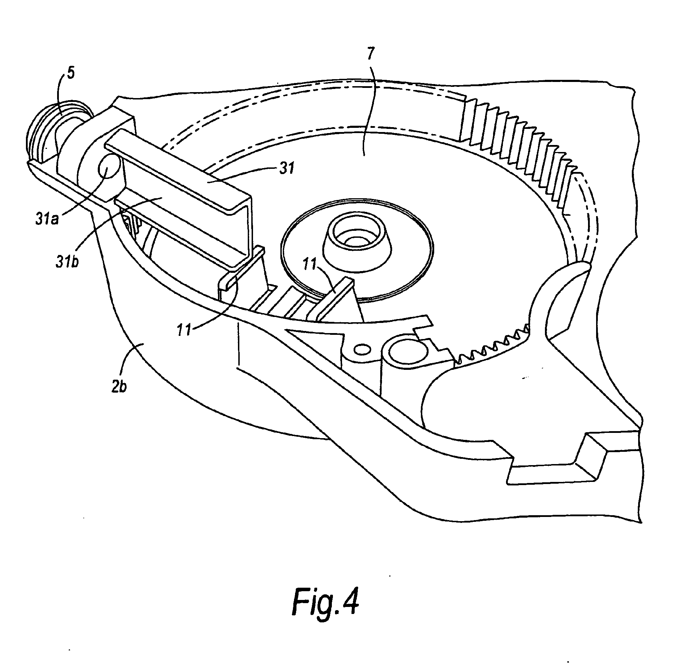

Figure 4 is a prospective internal view of a right side half of the housing,
Figure 5 is a prospective view of a winding panel which locates on an aperture in the right side housing part;
Figure 6 is a view corresponding to Figure 5 with the handle part folded;
Figure 7 is a prospective view of the right side handle part showing the drive coupling part and the handle closed;
Figure 7a is a perspective view corresponding to Figure 7 with the winding panel cut away;
Figure 8 is a perspective view showing the winding plate and coupling part engaged with the reel carrier of the housing;
Figure 8a is a perspective view corresponding to Figure 8 but with the winding plate omitted;
Figure 9 is a prospective view corresponding to Figure 8 with the reel mounted on the reel carrier,

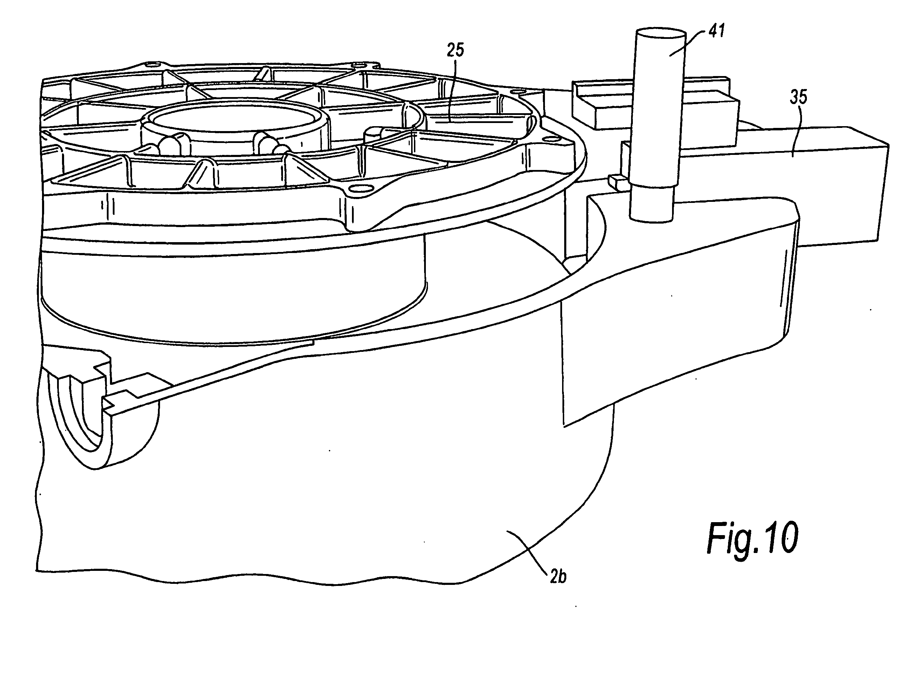

Figure 10 is a perspective view showing the assembly of Figure 9 mounted in the right side housing part;
Figure 11 is a perspective view of the housing showing a latch button and locking pin located in the region of the handle;
Figure 12 is a perspective view of the housing showing the latch button and locking pin of Figure 11;
Figure 13 is an enlarged view showing the latch button engaged with the spool to prevent rotation thereof relative to the housing;

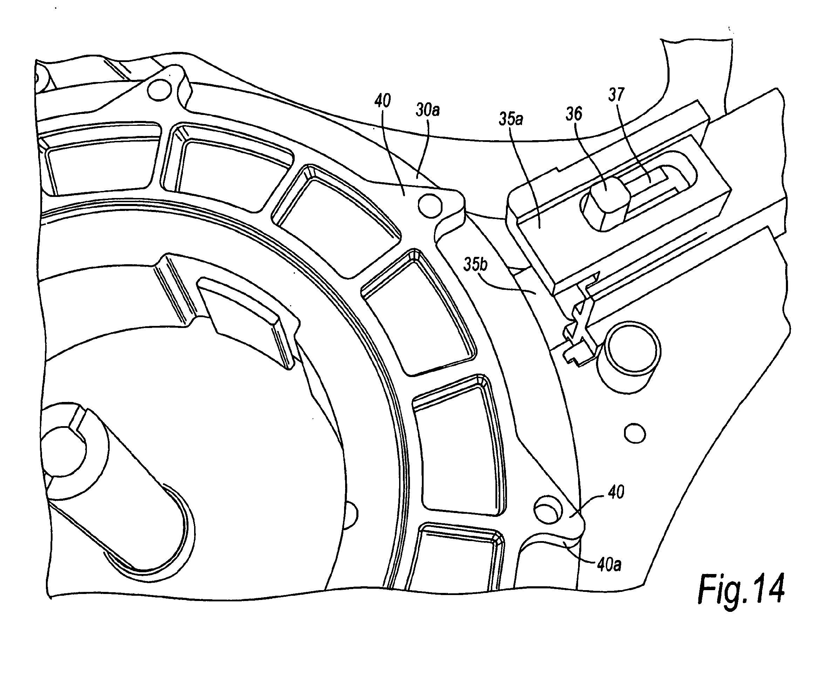

Figure 14 is an enlarged view corresponding to Figure 13 but with the latch button disengaged from the spool;
Figure 15 is an enlarged view of the inner end of the latch button and locking pin;

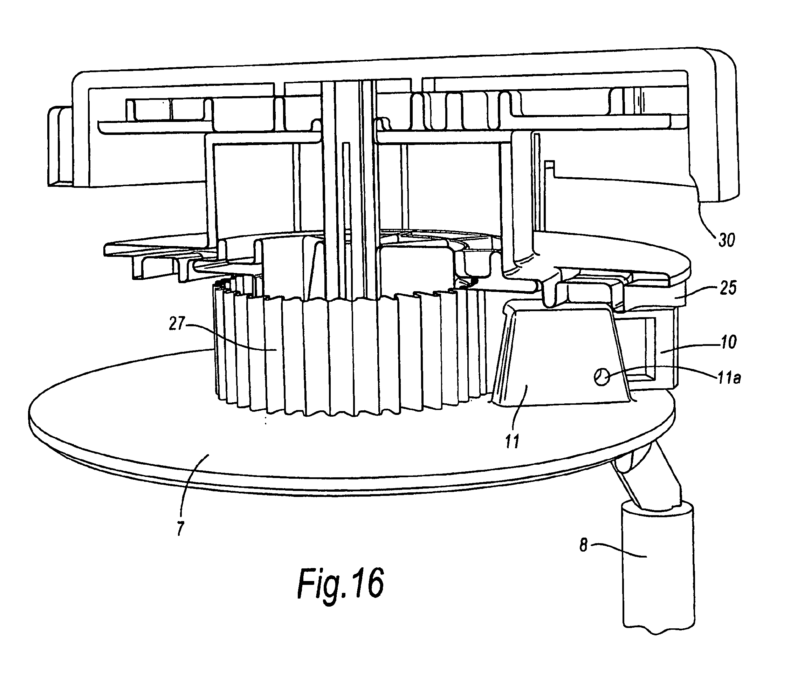

Figure 16 is a partially cut-away view of the assembled internal components of the lead of the invention; and
Figure 17 illustrates the shape of a lead outlet aperture in the housing.

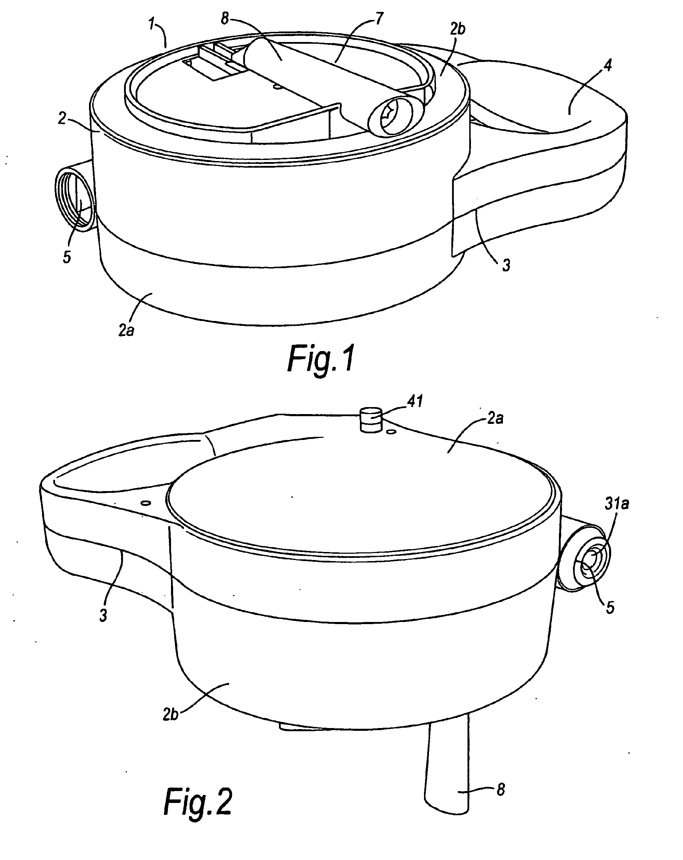

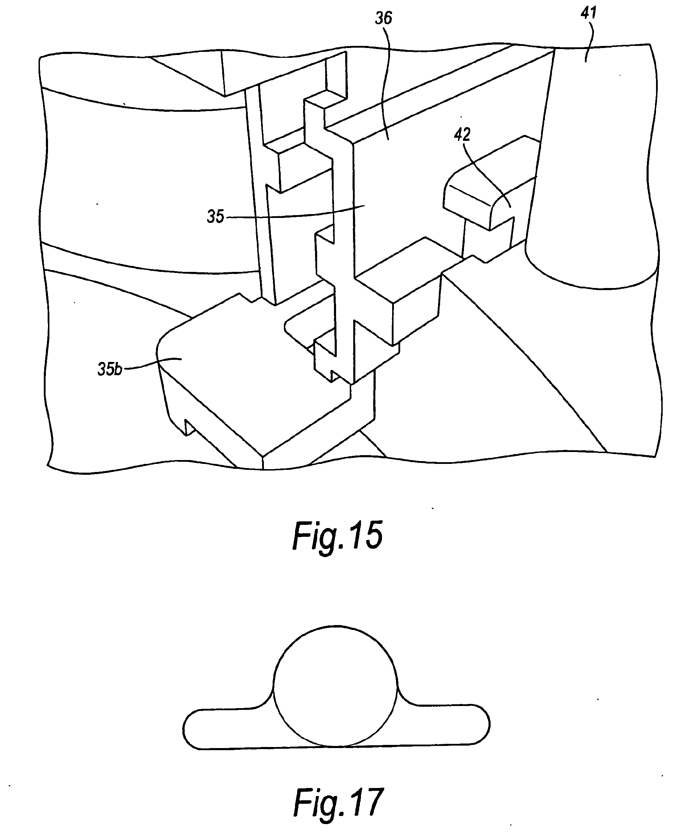

Referring first to Figure 1, there is shown a retractable animal lead 1. The lead is formed of a housing 2 which is longitudinally split along parting line 3 to form a left housing part 2a and a right housing part 2b. Moulded into one end of the housing 2 is a handle portion 4 by means of which, in use, the housing can be grasped in the hand of the user, and into the other end of the housing 2 is an aperture 5 which connects to the inside of the housing and through which, in use a lead cord or web, wound onto a reel 30 mounted within the housing, extends. Figure 17 shows the cross-section of the aperture 5, from which it can be seem that it is configured to allow guided passage of either a lead cord or a lead web.

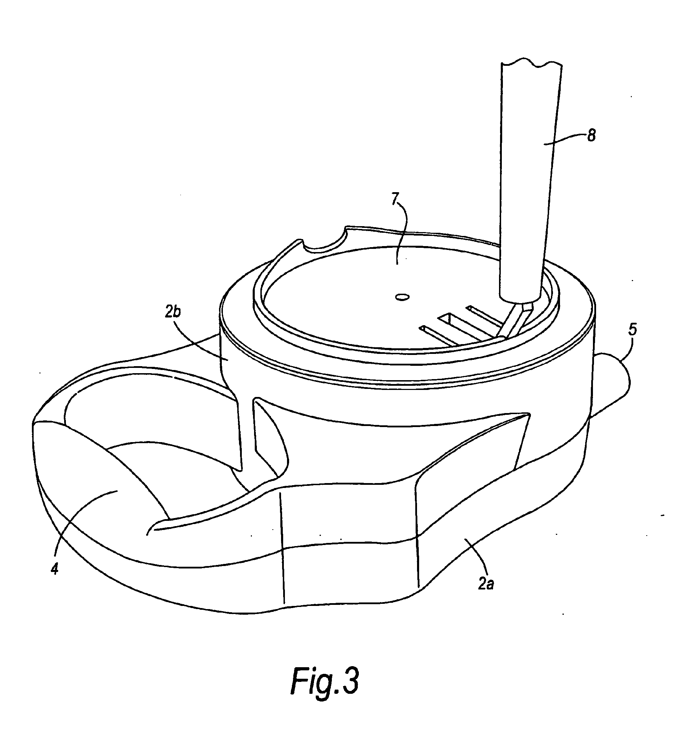

The right housing part 2b has an opening in its side face in which is rotatably mounted a winding plate 7. A winding handle 8 is pivotally attached to the winding plate 7 so as to be moveable between a retracted position in which it is folded against the winding plate so as to extend substantially diametrically there-across as shown in Figure 1, and an extended, use position, shown in Figure 3, in which the handle stands erect from the winding plate 7. In said extended position, the winding handle 8 may be grasped by the free hand of the user and operated to rotate the winding plate 7 within the housing 2.

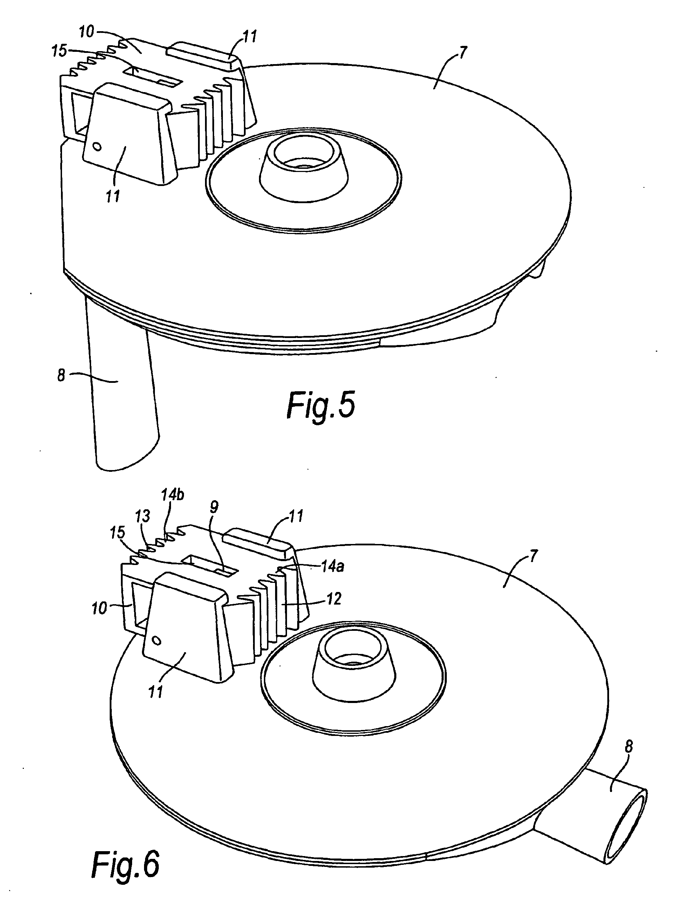

The end of the winding handle 8 which is attached to the winding plate 7 has a hook 9 formed thereon which extends through an opening in the winding plate 7. As can be seen in Figures 5 and 6, a pair of brackets 11 are formed on the inner surface 7a of the winding plate 7 in which is slidably mounted a drive member 10 for radial sliding movement relative to the axis of rotation of the winding plate 7. In the illustrated embodiment, the pivotal mounting of the winding handle to the winding plate 7 is achieved by means of a mounting pin which extends between the brackets 11, passing through mounting holes 11a formed therein, the drive member 10 have a longitudinal slot 10a formed therein in which the mounting pin locates to as to allow radial sliding movement of the drive member 10 relative to the mounting pin. The drive member 10 has teeth 12, 13 formed on its inner 14a and outer 14b radial faces, and has a central through slot 15 formed therein extending from the side adjacent the inner surface 7a in which the end of the hook 9 of the winding handle 8 engages so as to operatively connect the drive member 10 to the handle 8. As the winding handle 8 is pivoted from its retracted position to its extended position, the hook 9 pivots towards the central axis of the winding plate 7, moving the drive member 10 radially towards the axis of rotation as shown in Figure 5. Similarly, as the handle is moved back to its retracted position, the hook 9 pivots away from the central axis, sliding the drive member 10 radially outwardly away from the central axis as shown in Figure 6

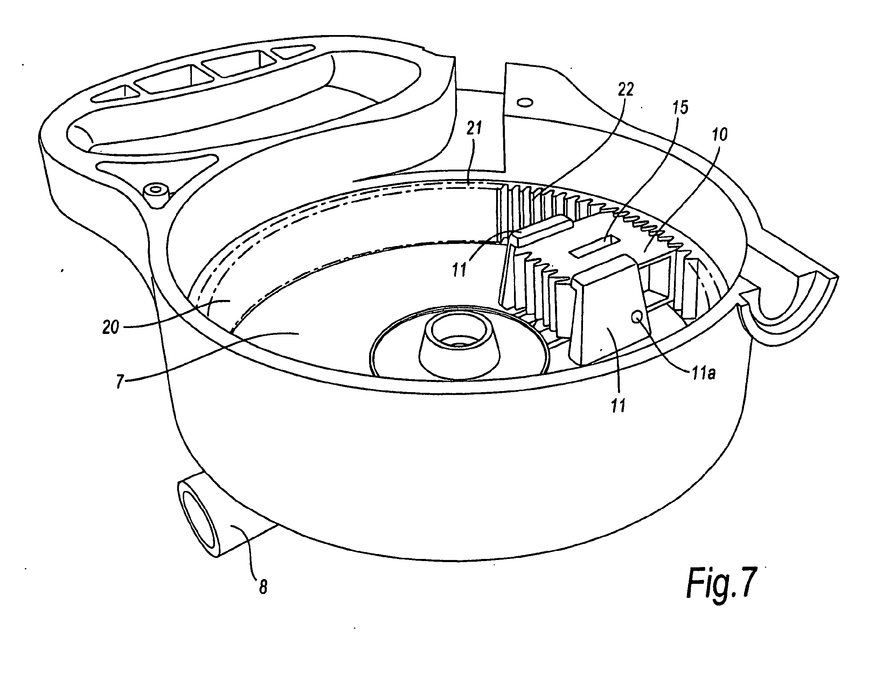

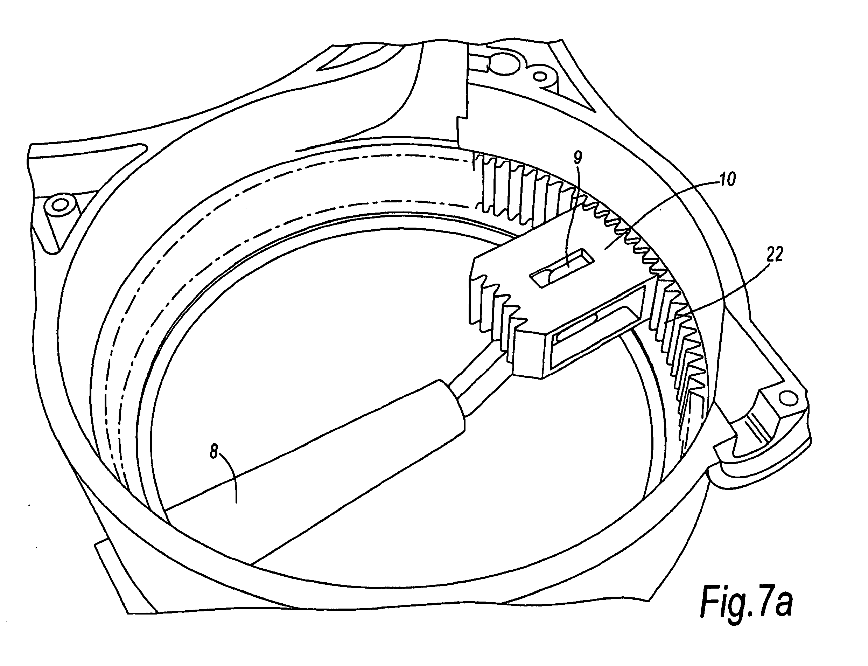

Referring next to Figure 7, there is shown a perspective internal view of the right housing part 2b with the winding plate 7 mounted therein. The right side housing part 2b has a circular inner chamber 20, the circumferential surface 21 of which carries teeth 22 around the entire periphery of the inner chamber 20. The teeth 22 of the right housing part 2b are complementary to the teeth 13 formed on the outer face 14b of the drive member 10 so that when the drive member moves to its radially outer position corresponding to the retracted position of the winding handle 8, the outer teeth 13 of the drive member 10 engage with the teeth 22 of the housing part 2b, locking the winding plate 7 against rotation relative to the housing 2. On the other hand, as the drive member 10 moves radially inwardly to its radially inner position corresponding to the extended position of the handle 8, the other teeth 13 of the drive member 10 disengage from the teeth 22 of the housing part 2b so as to allow the winding plate 7 and winding handle 8 to rotate within the housing 2.

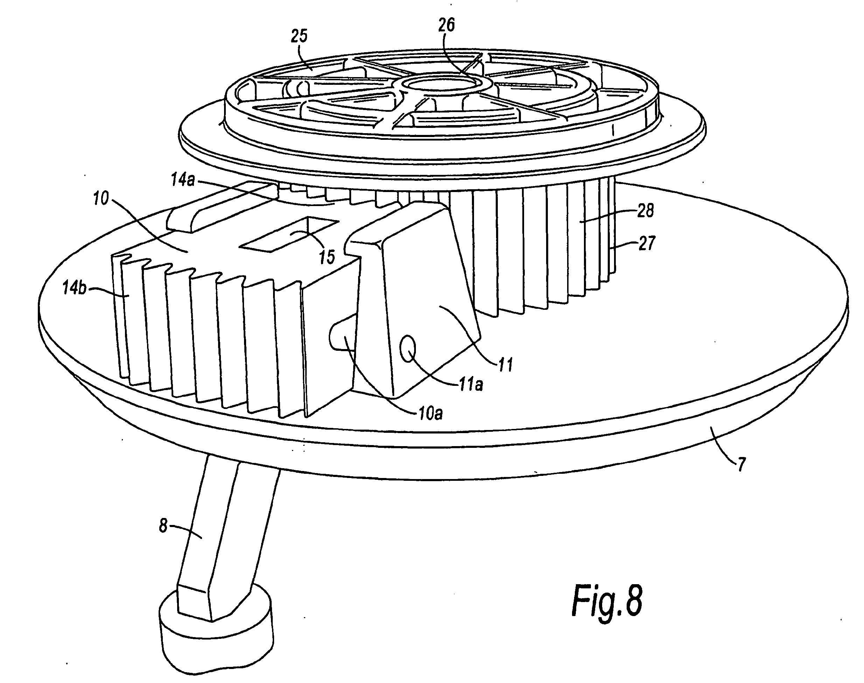

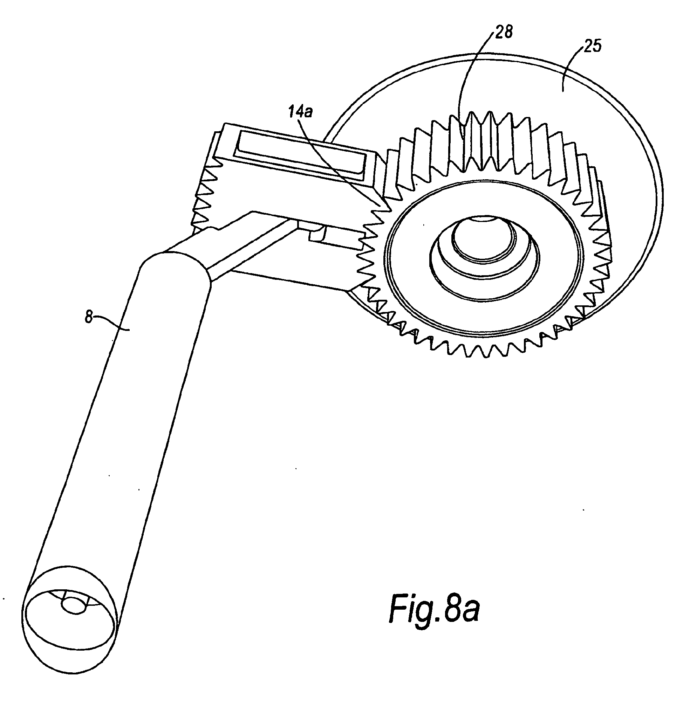

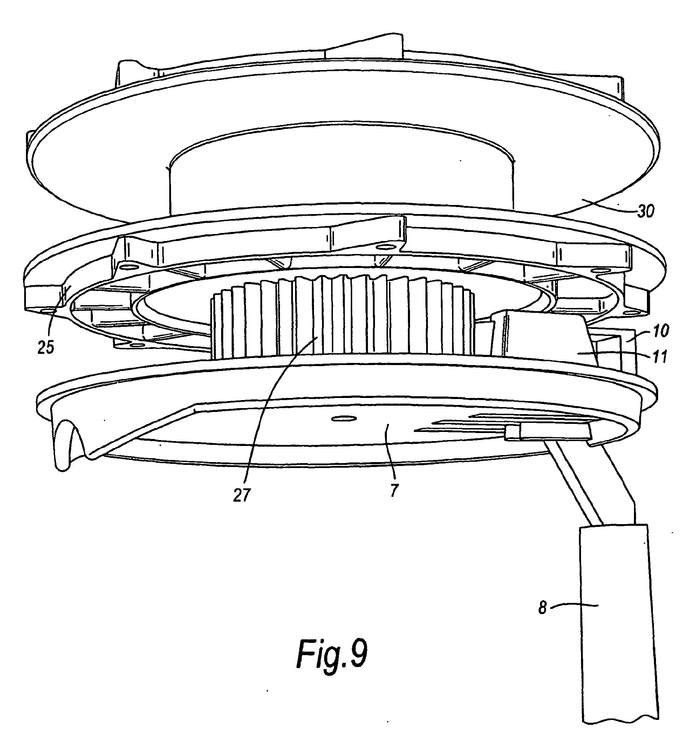

As shown in Figure 8, a drive spindle 25 is journal mounted in the housing 2 on top of and co-axial with the winding plate 7. The drive spindle 25 has an upper coupling end 26 on which is non-rotatably mounted a lead spool 30 (figure 9) on which the cord of the lead is would for storage. The coupling between the spool and the drive spindle 25 may be achieved in any conventional manner by simple interlocking mechanical arrangement and will not be described in detail here. The drive spindle 25 has a circumferential shoulder 27 on which is formed a plurality of drive teeth 28 complementary to the teeth 12 formed on the inner radial face 14a of the drive member 10. In the retracted position of the winding handle 8, the drive member 10 is moved radially outwardly away from drive teeth 28 of the drive spindle 25 so that the drive spindle and spool carried thereon are free to rotate independently of the winding plate 7. In the extended position of the handle, the teeth 12 of the drive member 10 engage with the drive teeth 28 of the drive spindle, locking the winding handle 8 and plate 7 to rotate with the drive spindle 25. In this way, manual rotation of the winding handle 8 rotates the drive spindle 25 and hence the spool carried thereon, allowing the cord of the lead to be wound back onto the spool and hence the animal to be "wound in" back to a closer proximity to the owner.

A torsional spring (not shown) or similar rotational biasing means is disposed between the spool 30 and the housing 2 which rotationally biases the spool automatically the rewind the lead cord onto the spool 30 when there is no tension applied thereto, the spool being rotatable against the loading of the spring upon application of sufficient tension to the lead to allow the lead to extend from the housing 2. The details of the biasing system are conventional and will not be described further.

A winding guide 31 locates in the aperture 5 of the housing 2, forming a nozzle 31a through which the lead cord or web passes and it extends from and rewinds onto the spool 30, a chute 31b extending from the nozzle interiorly of the housing towards the spool 30. The width of the chute 31b is substantially equal to and aligns with the width of the winding core 30a of the spool 30, and operates to guide the unwinding of the lead cord from and rewinding onto the spool 30.

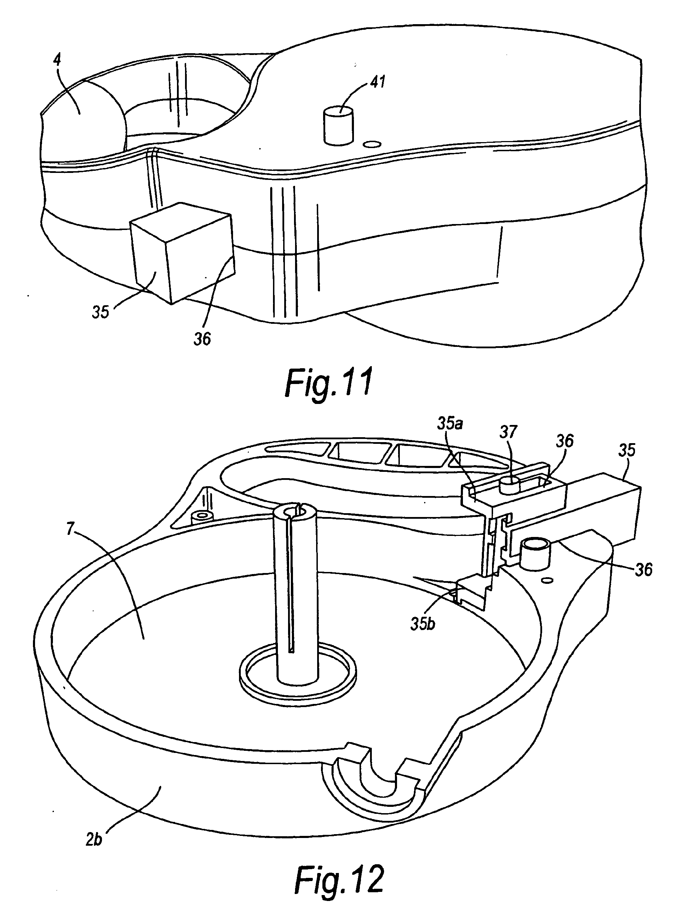

A locking button 35 is slidably mounted in an opening 36 in the housing proximate to the handle 4 so that the button 35 can easily be operated by the thumb of a hand grasping the handle 4. The button 35 has a pair of stops 35a, 35b extending from its inner end located within the housing. The button 35 has a guide slot 36 formed therein in which a guide pin 37 carried on the housing engages so as to constrain the limit the movement of the button 35 into and out of the housing. A spring (not shown) operatively engages between the guide pin 37 and the button 35 so as to urge the button outwardly from the housing into an extended position in which it is fully protrudes from the housing 2 and the stops 35a, 35b are radially spaced apart from the outer circumferential periphery of the spool 30. Upon application of sufficient pressure by a user on the button 35, the button 35 slides inwards against the loading of the spring into a locking position, moving the teeth radially towards the spool 30 and into a position in which they overlap the upper and lower faces 30a, 30b respectively of the spool 30 as shown in Figure 11. A plurality of saw tooth profiled locking teeth 40 are provided on each of the upper and lower faces 30a, 30b of the spool, located proximate to the outer circumference thereof, circumferentially distributed about and axially protruding from the upper and lower faces 30a, 30b respectively of the spool 30. The steep face 40a of the profile of each tooth 40 faces in the unwind direction of the spool.

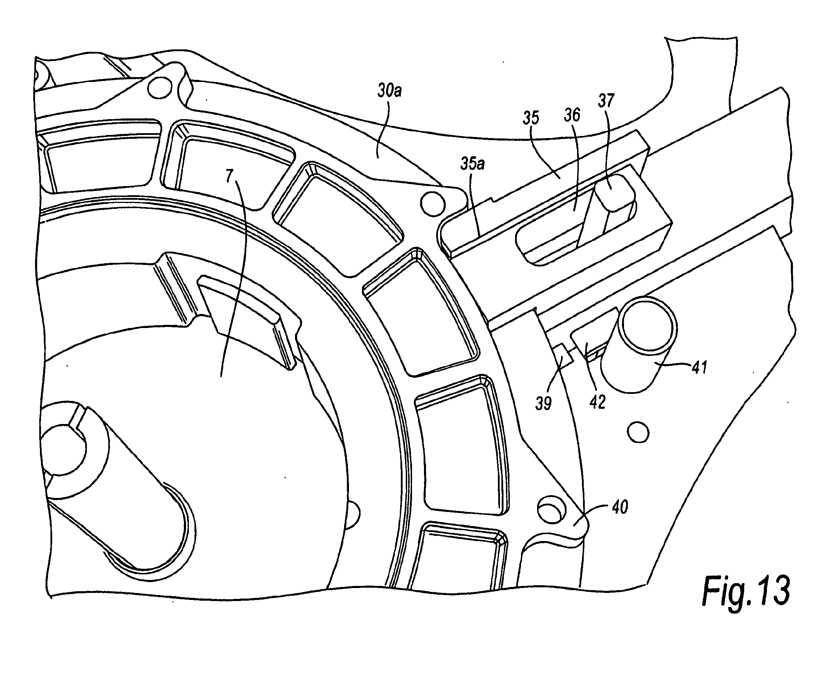

In the locking position of the button 35, each of the stops 35a, 35b engages between adjacent locking teeth 40 of the associated face as shown in Figure 13, so that rotation of the spool in either direction brings one of the locking teeth 40 to bear against the stop 35a, 35b when then prevents further rotation in either direction. As a result, the spool is limited to rotate through an angle equal to the angle between adjacent locking teeth 40.

The button may be held in by the user so as temporarily to lock the spool against rotation. If locking for a longer period is required, however, a latch pin 41 is provided in the side of the housing which is engagable with the button when it is in its locking position. As shown in Figure 15, the button 35 has a block 39 formed on the side thereof which is normally free to travel back and forth along the opening 36 in the housing 2 as the button moves between its extended to its locking positions. When the latch pin 41 is depressed, a stop 42 carried thereon is caused to move into the path of the block 35, preventing it from outwardly along the opening 36 in the housing and thereby retaining the button in its locking position. The latch pin 41 has a conventional press-latch operation so that upon first pressing it in, it latches in its depressed position and upon pressing it in again, it is released to return to a release position in which the stop 42 is withdrawn from the path of movement of the block 39 and hence the button 35 is free to move to its extended position, releasing the spool for rotation.

In a modified version of the locking system not illustrated, the stops 35a, 35b may be slidably connected to the button and biased by biasing means into an extended position, the stops being retractable against the biasing means by a distance at least equal to the radial height of each of the locking teeth 40 formed on the spool. In this way, when the button is engaged, the stops 35a, 35b will operate to limit rotational movement of the spool in the unwind direct as described above, upon rotation of the spool in the rewind direction, the ramped face of the saw profiled teeth 40 will develop a camming action with the stops 35a, 35b, urging them radially outwards to allow the teeth 40 to move there-past. In this way, the button operates to prevent the animal attached to the leash from moving any further away from the use, and but the leash can re-wind if the animal moves back towards the user, and will, at each stage, be locked at the new, shorter length.

## Claims

1. A retracting animal lead (1) comprising a housing (2) having a handle portion (4) and an internal chamber (20) in which a spool (30) is rotatably mounted, an extraction opening (5) in the housing (2) aligned with a winding cylinder of the spool (30), and rotational biasing means biasing the spool (30) into a first rotational position, the spool (30) being rotatable against the action of the biasing means so as, in use, to unwind from the spool (30) a lead material wound thereon; **characterised by** a winding handle (8) rotatably mounted to the outside of the housing (2), and coupling means (7, 10, 11, 25) non-rotatably coupling the winding handle (8) to the spool (30) so as to enable manual rotation of the spool (30), thereby, in use, enabling the lead material manually to be rewound onto the spool (30).

2. A retracting animal lead according to claim 1, wherein the coupling means (7, 10, 11, 25) is operatively moveable between an engaged position in which it non-rotatably couples the winding handle (8) to the spool (30) and a disengaged position in which the winding handle (8) is rotationally decoupled from the spool (30).

3. A retracting animal lead according to claim 2, wherein, in said disengaged position, the coupling means (7, 10, 11, 25) non-rotatably couples the winding handle (8) to the housing (2).

4. A retracting animal lead according to claim 2 or claim 3, wherein the housing (2) has an opening in one side thereof in which a winding disc (7) is rotatably mounted so as to form one side of the internal chamber (20), the winding handle (8) being eccentrically non-rotatable mounted on the outside of the winding disc (7).

5. A retracting animal lead according to claim 4, wherein coupling means includes a coupling member (10) which is eccentrically mounted on the inside of the winding disc (7) and is radially slidably moveable between said engaged and disengaged positions.

6. A retracting animal lead according to claim 5, wherein the coupling member (10) has splines (12, 13) formed on inner and outer radial faces (14a, 14b) which complement splines (22) formed on the inner surface (21) of the housing (2) and splines (28) associated with the spool (30), in a radially inner position of the coupling member (10) the inner splines (12) engaging the splines (28) associated with the spool (30) in order to effect a rotational drive coupling between the winding disc (7) and the spool (30), and in a radially outer position, the outer splines (13) engaging the splines (22) of the inner surface (21) of the housing (2) in order to non-rotatably couple the winding handle (7) to the housing (2).

7. A retracting animal lead according to claim 6, wherein the winding disc (7) has a pair of circumferentially spaced apart mounting brackets (11) extending at an eccentric position from its inner surface, the coupling member (10) being mounted between said brackets (11) so as to be constrained to rotate with the winding disc (7) whilst being radially slidably moveable relative to the winding disc (7).

8. A retracting animal lead according to any of claims 4 to 7, wherein the winding handle (8) is pivotally attached to the winding disc (7) for movement between an erect position in which it upstands from the disc (7) and a folded position in which it extends diametrically across the winding disc (7).

9. A retracting animal lead according to claim 8, wherein the winding handle (8) is operatively connected to the coupling member (10) so as automatically to move the coupling member (10) radially from its disengaged position to its engaged position when the winding handle (8) pivots from its folded to its erect position.

10. A retracting animal lead according to claim 9, wherein an inner end (9) of the winding handle (8) operatively engages in an opening (10a) in the coupling member (10), the pivot point of the winding handle (8) being located between the ends of the handle (8) so that upon pivotal movement of the winding handle (8), said inner end (9) moves radially relative to the winding disc (7), moving the coupling member (10) between its engaged and disengaged positions.

11. A retracting animal lead according to any of the preceding claims, wherein the housing (2) has a spool carrier (25) rotatably mounted therein, the coupling member (10) non-rotatably coupling the winding handle (8) and the spool carrier (25), the spool carrier (25) having an engagement surface (26) on which the spool (30) is concentrically mounted so as to non-rotatably connect the spool (30) to the spool carrier (25).

12. A retracting animal lead according to any of the preceding claims, wherein the handle (4) includes locking means (35) operable to engage the spool (30) so as to prevent rotation thereof relative to the housing (2), thereby, in use, preventing the lead from unwinding from the spool.

13. A retracting animal lead according to claim 12, wherein the locking means (35) includes a pin (35a, 35b) which engages between teeth (40) formed on the spool (30), preventing the teeth (40) from moving past the pin (35a, 35b) and hence limiting the rotational movement of the spool (30).

## Patentansprüche

1. Einziehbare Tierleine (1), die ein Gehäuse (2) umfasst, das einen Griffteil (4) und eine interne Kammer (20), in der eine Spule (30) drehbar montiert ist, eine Ausziehöffnung (5) im Gehäuse (2), die mit einem Wickelzylinder der Spule (30) fluchtet und drehende Vorspannmittel zum Vorspannen der Spule (30) in eine erste Rotationsposition aufweist, wobei die Spule (30) gegen die Wirkung des Vorspannmittels drehbar ist, um, im Gebrauch, ein darauf aufgewickeltes Material der Leine von der Spule (30) abzuwickeln; **gekennzeichnet durch** eine Handkurbel (8), die drehbar an der Außenseite des Gehäuses (2) montiert ist und Kupplungsmittel (7, 10, 11, 25) die Handkurbel (8) nicht drehbar an die Spule (30) kuppeln, um manuelle Rotation der Spule (30) zu ermöglichen, um **dadurch**, im Gebrauch, zu ermöglichen das Material der Leine wieder auf die Spule (30) manuell aufzuwickeln.

2. Einziehbare Tierleine nach Anspruch 1, wobei das Kupplungsmittel (7, 10, 11, 25) wirkend zwischen einer eingerasteten Position, in welcher es die Handkurbel (8) nicht drehbar an die Spule (30) kuppelt und einer ausgerückten Position beweglich ist, in welcher die Handkurbel (8) drehbar von der Spule (30) abgekuppelt ist.

3. Einziehbare Tierleine nach Anspruch 2, wobei, in besagter ausgerückten Position, das Kupplungsmittel (7, 10, 11, 25) die Handkurbel (8) nicht drehbar an das Gehäuse (2) kuppelt.

4. Einziehbare Tierleine nach Anspruch 2 oder Anspruch 3, wobei das Gehäuse (2) eine Öffnung in einer Seite davon aufweist, in welcher ein Wickelteller (7) drehbar montiert ist, um eine Seite der internen Kammer (20) zu bilden, wobei die Handkurbel (8) nicht drehbar exzentrisch an der Außenseite des Wickeltellers (7) montiert ist.

5. Einziehbare Tierleine nach Anspruch 4, wobei das Kupplungsmittel ein Kupplungselement (10) einschließt, das an der Innenseite des Wickeltellers (7) exzentrisch montiert ist und zwischen den besagten eingerasteten und ausgerückten Positionen radial verschiebbar beweglich ist.

6. Einziehbare Tierleine nach Anspruch 5, wobei das Kupplungselement (10) Kerbverzahnungen (12, 13) aufweist, die an inneren und äußeren radialen Flächen (14a, 14b) gebildet sind, welches Kerbverzahnungen (22), die an der Innenfläche (21) des Gehäuses (2) gebildet sind und Kerbverzahnungen (28) komplimentiert, die mit der Spule (30) assoziiert sind, wobei in einer radialen inneren Position des Kupplungselements (10) die inneren Kerbverzahnungen (12) in die Kerbverzahnungen (28) einrasten, die mit der Spule (30) assoziiert sind, um eine rotierende Antriebskupplung zwischen dem Wickelteller (7) und der Spule (30) zu bewirken und, wobei in einer radialen äußeren Position, die äußeren Kerbverzahnungen (13) in die Kerbverzahnungen (22) der Innenfläche (21) des Gehäuses (2) einrasten, um die Handkurbel (7) nicht drehbar an das Gehäuse (2) zu kuppeln.

7. Einziehbare Tierleine nach Anspruch 6, wobei der Wickelteller (7) ein Paar zirkumferenziell beabstandete Befestigungswinkel (11) aufweist, die sich an einer exzentrischen Position von seiner Innenfläche erstrecken, wobei das Kupplungselement (10) zwischen den besagten Winkeln (11) befestigt ist, um festgehalten zu werden, um sich mit dem Wickelteller (7) zu drehen, während es relativ zum Wickelteller (7) radial verschiebbar beweglich ist.

8. Einziehbare Tierleine nach einem beliebigen der Ansprüche 4 bis 7, wobei die Handkurbel (8) schwenkbar am Wickelteller (7) zur Bewegung zwischen einer aufrechten Position, in der sie aus dem Teller (7) nach oben hervorsteht und einer gefalteten Position befestigt ist, in der sie sich diametrisch über den Wickelteller (7) erstreckt.

9. Einziehbare Tierleine nach Anspruch 8, wobei die Handkurbel (8) wirkend mit dem Kupplungselement (10) verbunden ist, um das Kupplungselement (10) automatisch aus seiner ausgerückten Position in seine eingerastete Position zu bewegen, wenn die Handkurbel (8) aus ihrer gefalteten in ihre aufrechte Position schwenkt.

10. Einziehbare Tierleine nach Anspruch 9, wobei ein inneres Ende (9) der Handkurbel (8) wirkend in eine Öffnung (10a) im Kupplungselement (10) einrastet, wobei sich der Schwenkpunkt der Handkurbel (8) zwischen den Enden der Kurbel (8) befindet, sodass sich, nach Schwenkbewegung der Handkurbel (8), das besagte innere Ende (9) radial relativ zum Wickelteller (7) bewegt, welches das Kupplungselement (10) zwischen seinen eingerasteten und ausgerückten Positionen bewegt.

11. Einziehbare Tierleine nach einem beliebigen der vorangehenden Ansprüche, wobei das Gehäuse (2) einen Spulenträger (25) aufweist, der drehbar darin montiert ist, wobei das Kupplungselement (10) die Handkurbel (8) und den Spulenträger (25) nicht drehbar kuppelt, wobei der Spulenträger (25) eine Einrastoberfläche (26) aufweist, auf der die Spule (30) konzentrisch montiert ist, um die Spule (30) mit dem Spulenträger (25) nicht drehbar zu verbinden.

12. Einziehbare Tierleine nach einem beliebigen der vorangehenden Ansprüche, wobei der Griff (4) das Verriegelungsmittel (35) einschließt, das betriebsfähig ist, die Spule (30) einzurasten, um Drehung davon relativ zum Gehäuse (2) zu verhindern, und dadurch, im Gebrauch, das Abwickeln der Leine von der Spule zu verhindern.

13. Einziehbare Tierleine nach Anspruch 12, wobei das Verriegelungsmittel (35) einen Stift (35a, 35b) einschließt, der zwischen den Zähnen (40) einrastet, die an der Spule (30) gebildet sind, was die Zähne (40) darin hindert, sich am Stift (35a, 35b) vorbei zu bewegen und somit die Drehbewegung der Spule (30) begrenzt.

## Revendications

1. Laisse d'animal rétractable (1) comprenant un boîtier (2) ayant une partie poignée (4) et une chambre interne (20) dans laquelle une bobine (30) est montée de manière rotative, une ouverture d'extraction (5) dans le boîtier (2) alignée avec un tambour d'enroulement de la bobine (30), et un moyen de sollicitation rotative sollicitant la bobine (30) dans une première position de rotation, la bobine (30) pouvant être tournée contre l'effet du moyen de sollicitation afin de, en cours d'utilisation, dérouler de la bobine (30) une matière de laisse enroulée sur celle-ci ; **caractérisée par** une poignée d'enroulement (8) montée de manière rotative sur l'extérieur du boîtier (2), et par un moyen de liaison (7, 10, 11, 25) reliant de manière non rotative la poignée d'enroulement (8) à la bobine (30) de façon à permettre la rotation manuelle de la bobine (30), permettant ainsi, en cours d'utilisation, de réenrouler manuellement la matière de laisse sur la bobine (30).

2. Laisse d'animal rétractable selon la revendication 1, dans laquelle le moyen de liaison (7, 10, 11, 25) peut être bougé de manière opérationnelle entre une position engagée dans laquelle il relie de manière non rotative la poignée d'enroulement (8) à la bobine (30) et une position dégagée dans laquelle la poignée d'enroulement (8) est détachée rotativement de la bobine (30).

3. Laisse d'animal rétractable selon la revendication 2, dans laquelle, dans ladite position dégagée, le moyen de liaison (7, 10, 11, 25) relie de manière non rotative la poignée d'enroulement (8) au boîtier (2).

4. Laisse d'animal rétractable selon la revendication 2 ou 3, dans laquelle le boîtier (2) a une ouverture dans un côté de celui-ci dans laquelle un disque d'enroulement (7) est monté de manière rotative de façon à former un côté de la chambre interne (20), la poignée d'enroulement (8) étant montée excentriquement de manière non rotative sur l'extérieur de ce disque d'enroulement (7).

5. Laisse d'animal rétractable selon la revendication 4, dans laquelle le moyen de liaison comprend un élément de liaison (10) qui est monté excentriquement sur l'intérieur du disque d'enroulement (7) et qui peut être bougé radialement par coulissement entre lesdites positions engagée et dégagée.

6. Laisse d'animal rétractable selon la revendication 5, dans laquelle l'élément de liaison (10) a des cannelures (12, 13) formées sur les faces radiales interne et externe (14a, 14b) qui concordent avec les cannelures (22) formées sur la surface interne (21) du boîtier (2) et avec les cannelures (28) associées à la bobine (30), dans une position radialement interne de l'élément de liaison (10), les cannelures internes (12) s'engageant avec les cannelures (28) associées à la bobine (30) de façon à créer une liaison d'entraînement rotatif entre le disque d'enroulement (7) et la bobine (30), et dans une position radialement externe, les cannelures externes (13) s'engageant avec les cannelures (22) de la surface interne (21) du boîtier (2) afin de relier de manière non rotative la poignée d'enroulement (7) au boîtier (2).

7. Laisse d'animal rétractable selon la revendication 6, dans laquelle le disque d'enroulement (7) a une paire de pattes de fixation écartées circonférentiellement (11) s'étendant dans une position excentrique depuis sa surface interne, l'élément de liaison (10) étant monté entre lesdites pattes (11) de façon à être forcé de tourner avec le disque d'enroulement (7) tout en pouvant bouger radialement par coulissement par rapport au disque d'enroulement (7).

8. Laisse d'animal rétractable selon l'une quelconque des revendications 4 à 7, dans laquelle la poignée d'enroulement (8) est attachée de manière pivotante au disque d'enroulement (7) pour bouger entre une position dressée dans laquelle elle s'élève verticalement depuis le disque (7) et une position repliée dans laquelle elle s'étend diamétralement en travers du disque d'enroulement (7).

9. Laisse d'animal rétractable selon la revendication 8, dans laquelle la poignée d'enroulement (8) est reliée de manière opérationnelle à l'élément de liaison (10) de façon à bouger automatiquement l'élément de liaison (10) radialement de sa position dégagée dans sa position engagée lorsque la poignée d'enroulement (8) pivote de sa position repliée dans sa position dressée.

10. Laisse d'animal rétractable selon la revendication 9, dans laquelle une extrémité interne (9) de la poignée d'enroulement (8) s'engage de manière opérationnelle dans une ouverture (10a) dans l'élément de liaison (10), le point de pivotement de la poignée d'enroulement (8) étant situé entre les extrémités de la poignée (8) de manière à ce que, lors du mouvement de pivotement de la poignée d'enroulement (8), ladite extrémité interne (9) bouge radialement par rapport au disque d'enroulement (7), bougeant l'élément de liaison (10) entre ses positions engagée et dégagée.

11. Laisse d'animal rétractable selon l'une quelconque des revendications précédentes, dans laquelle le boîtier (2) a un porte-bobine (25) monté de manière rotative à l'intérieur de celui-ci, l'élément de liaison (10) reliant de manière non rotative la poignée d'enroulement (8) et le porte-bobine (25), le porte-bobine (25) ayant une surface d'engagement (26) sur laquelle la bobine (30) est montée concentriquement de façon à relier de manière non rotative la bobine (30) au porte-bobine (25).

12. Laisse d'animal rétractable selon l'une quelconque des revendications précédentes, dans laquelle la poignée (4) comprend un moyen de blocage (35) pouvant être utilisé pour s'engager avec la bobine (30) afin d'empêcher la rotation de celle-ci par rapport au boîtier (2), empêchant ainsi, en cours d'utilisation, à la laisse de se dérouler de la bobine.

13. Laisse d'animal rétractable selon la revendication 12, dans laquelle le moyen de blocage (35) comporte une cheville (35a, 35b) qui s'engage entre les dents (40) formées sur la bobine (30), empêchant les dents (40) de passer au-delà de la cheville (35a, 35b) et limitant donc le mouvement de rotation de la bobine (30).
